# EUROPÄISCHE PATENTANMELDUNG

(11) **EP 2 806 516 A1**
(43) Veröffentlichungstag der Anmeldung: **26.11.2014**
(21) Anmeldenummer: 14169443.0
(22) Anmeldetag: 22.05.2014
(51) Int. Cl.: H02G 3/22, H02B 1/30

(54) **Dichtblock für Einzeladern**

(30) Priorität: 24.05.2013 DE 102013105380
(71) Anmelder: Berthold Sichert GmbH, 12277 Berlin (DE)
(72) Erfinder: Irmer, Günter, 13055 Berlin (DE); Perschon, Helmut, 12305 Berlin (DE)
(74) Vertreter: Alber, Norbert

(57) **Zusammenfassung**

Um nicht nur ganze Kabel **(12),** sondern auch einzelne Adern **(13)** durch einen Durchbruch **(4, 5),** beispielsweise in der Bodenplatte **(1)** eines Kabelverteilerschrankes **(3),** abgedichtet hindurchführen zu können, wird anstelle der üblichen, für Kabel **(12)** verwendeten Gummi-Tüllen **(6, 7)** in Kegelform ein Dichtblock **(8, 9)** vorgeschlagen, der aus einem elastischen, geschlitzten Dichtelement **(14)** und vorzugsweise einem dieses Dichtelement umgebenden und dieses positionierenden Dichtelement-Gehäuse **(17)** besteht.

## Beschreibung

### I. Anwendungsgebiet

Die Erfindung betrifft einen Baukasten zum dichten Hindurchführen von Kabeln und Adern durch Durchbrüche, in einer Platte sowie ein Verfahren zum Hindurchführen von Kabeln und Adern mittels des besagten Baukastens.

### II. Technischer Hintergrund

Das Problem des dichten Hindurchführens von elektrischen Kabeln und Adern durch Durchbrüche in Platten oder in anderen Elementen stellt sich gerade bei im Erdboden verlegten Kabeln und Adern häufig, um das Vordringen von Wasser aus dem Erdreich entlang der Kabel oder Adern zu verhindern.

Ein typischer Anwendungsfall sind die sog. Kabelverteilerschränke, die - meist auf öffentlichem Grund errichtet - die Verteilung von Telekommunikationsanschlüssen zu einzelnen Haushalten enthalten, ausgehend von im Boden verlegten Erdkabeln, die zu diesem Zweck vom Erdreich aus in den Sockel eines Kabelverteilerschrankes eingeführt und von dort durch eine sog. Bodenplatte, die horizontal die Trennung zwischen dem oberen Ende des Sockels und dem oberen Teil des Kabelverteilerschrankes darstellt, nach oben geführt werden.

In diesem Zusammenhang ist es bereits bekannt, dass die Bodenplatte Durchbrüche entsprechend der Anzahl der hindurchzuführenden Kabel aufweist. Zwecks Abdichtung des Durchganges der Kabel durch die entsprechende Öffnung in der Bodenplatte werden in diese Öffnungen bekanntermaßen Kabeltüllen aus elastischem, gummiähnlichem Material eingesetzt, die sich von der Ebene der Platte aus in eine Richtung, in der Regel nach oben, kegelförmig erstrecken, sodass die Anpassung an den Durchmesser des hindurchzuführenden Kabels dadurch erfolgt, dass der Kegel der Kabeltülle auf der entsprechenden Höhe abgeschnitten wird, sodass die sich dadurch bildende Öffnung dicht und mit Vorspannung am Außenumfang des Kabels anliegt.

In diesem Zusammenhang sind runde Kabeltüllen zum Hindurchführen von einem Kabel und mit nur einem Kegel an der Tülle vorgesehen, die in entsprechende runde Durchbrüche passen, aber auch längliche Kabeltüllen, die dann in der Regel zwei Kegel nebeneinander aufweisen und in entsprechend längliche, meist langlochförmige, mit einem halbrunden Ende ausgestattete, Durchbrüche der Platte passen.

Es gibt jedoch auch die Situation, dass ein oder mehrere einzelne Adern eines Kabels durch einen solchen - runden oder länglichen - Durchbruch in einer Platte hindurchgeführt werden sollen, und auch diese Hindurchführung nach Möglichkeit flüssigkeitsdicht sein soll.

### III. Darstellung der Erfindung

### a) Technische Aufgabe

Es ist daher die Aufgabe gemäß der Erfindung, einen Baukasten sowie ein Verfahren zum Hindurchführen von Adern und Kabeln zu schaffen, mit dessen Hilfe es möglich ist, durch die gleiche Art von Durchbrüchen in einer Platte entweder Kabel oder Adern hindurchzuführen.

### b) Lösung der Aufgabe

Diese Aufgabe wird durch die Merkmale der Ansprüche 1 und 12 gelöst. Vorteilhafte Ausführungsformen ergeben sich aus den Unteransprüchen.

Hinsichtlich des **Baukastens** wird diese Aufgabe dadurch gelöst, dass der Baukasten wenigstens einen Dichtblock zum Hindurchführen einer oder mehrerer Adern umfasst, der in einen der Durchbrüche der Platte passt, in die insbesondere auch die Kabeltüllen passen.

Der Dichtblock umfasst dabei ein Dichtelement aus elastischem Material, und besitzt zwei gegeneinander im montierten Zustand angepresste Kontaktflächen, zwischen denen die wenigstens eine hindurchzuführende Ader verläuft.

Auf diese Art und Weise können dieselben Durchbrüche, die ursprünglich vorgesehen sind, zur Aufnahme von Kabeltüllen, die dem Hindurchführen ganzer Kabel dienen, stattdessen nicht mit einer solchen Kabeltülle bestückt werden, sondern mit dem erfindungsgemäßen Dichtblock, durch den hindurch ein oder mehrere einzelne Adern ebenfalls flüssigkeitsdicht hindurch geführt werden können.

Somit können die vorhandenen Bauteile, wie etwa die Platten mit den entsprechenden Durchbrüchen und die darin hinein passenden Kabeltüllen, weiter verwendet werden und müssen nicht neu gestaltet werden, und werden allein durch einen dazu passenden Dichtblock einem erweiterten Verwendungszweck, nämlich der Hindurchführung der einzelnen Adern, zugeführt.

Da gerade die Bodenplatte eines Verteilerschrankes häufig sowohl runde Durchbrüche aufweist, die für die Aufnahme einer Kabeltülle für die Hindurchführung eines einzigen Kabels vorgesehen sind, als auch längliche Durchbrüche, in denen entsprechend längliche Kabeltüllen angeordnet werden können, in denen zwei oder gar mehr Kabel nebeneinander hindurch geführt werden können, umfasst der Baukasten vorzugsweise ebenso runde und längliche Dichtblöcke, die in die runden Durchbrüche einerseits und in die länglichen Durchbrüche andererseits passen.

Vorzugsweise umfasst jeder Dichtblock außer dem Dichtelement auch ein im montierten Zustand das Dichtelement umgebende Dichtelement-Gehäuse, welches das Dichtelement, welches ja aus einem elastischen Material besteht, in axialer und Umfangsrichtung begrenzt und aus einem formstabilen Material, in der Regel Kunststoff, besteht. Dieses Dichtelement-Gehäuse besitzt zu diesem Zweck in Verlaufsrichtung der hindurchzuführenden Adern stirnseitig jeweils mindestens eine Öffnung, zusätzlich jedoch auch stirnseitig Anschlagflächen für das Dichtelement, beispielsweise einen von außen zur Mitte hin vorstehenden Rand.

Auch mehrere nebeneinander angeordnete Öffnungen an jeder Stirnseite sind möglich.

Die Öffnungen in den Stirnseiten fluchten vorzugsweise zueinander.

Ferner umfasst das Dichtelement-Gehäuse auf seiner Außenseite eine Befestigungsvorrichtung zum Befestigen des Dichtelement-Gehäuses und damit des gesamten Dichtblockes gegenüber der Platte, damit der Dichtblock sich nicht unbeabsichtigt nach der Montage von der Platte löst.

Bei dieser Befestigungsvorrichtung handelt es sich vorzugsweise um eine Rastvorrichtung, die am Innenumfang des Durchbruches der Platte verrastet werden kann, beispielsweise indem auf der Außenseite des Befestigungs-Gehäuses auf jeder Seite einander gegenüber liegend zwei zueinander beabstandete Wulste verlaufen, zwischen denen eine Nut **2** gebildet wird mit einer Breite entsprechend der Dicke der Platte.

Dadurch kann der aus Dichtelement-Gehäuse und darin aufgenommenen Dichtelement bestehende Dichtblock nachdem die hindurchzuführende Ader darin untergebracht ist, entlang der Ader vorwärts geschoben werden bis diese Rastvorrichtung im Innenumfang der Öffnung der Platte einrastet.

Für eine leichtere Handhabung kann das Dichtelement-Gehäuse entweder aus zwei separaten Teilen bestehen oder noch besser aus zwei Teilen, die an einer Umfangsstelle gelenkig miteinander verbunden sind, beispielsweise aus zwei Halbschalen. Diese können auseinander geklappt, dann das Dichtelement eingelegt und anschließend die beiden Teile oder Halbschalen des Dichtelement-Gehäuses gegeneinander gelegt werden.

Um eine zusätzliche Sicherheit außer der Verrastung in der Öffnung der Platte zu bieten, können an den Außenflächen des Dichtelement-Gehäuses in Umfangsrichtung verlaufend zwei oder mehr Einkerbungen vorhanden sein mit einer Breite entsprechend der Breite eines üblichen Kabelbinders. Dadurch kann nach Schließen des Dichtelement-Gehäuses in diese Einkerbung ein umlaufender Kabelbinder gelegt und stramm gezogen werden, der die Teile des Dichtelement-Gehäuses gegeneinander presst, auch wenn der gesamte Dichtblock noch nicht oder nicht mehr in der Öffnung der Platte verrastet ist.

Das Dichtelement selbst besteht häufig aus Schaumstoff, beispielsweise einem geschlossen-zelligen Schaumstoff, um das Vordringen von Feuchtigkeit durch den Schaumstoff selbst zu verhindern.

Die beiden gegeneinander zu pressenden Kontaktflächen des Dichtelementes verlaufen vorzugsweise - bei einem in der Aufsicht betrachtet nicht runden Dichtelement - in Richtung der größten Erstreckungsrichtung des Dichtelementes, bei einem runden Dichtelement können die Kontaktflächen auch rund oder spiralförmig angeordnet sein, oder den runden Querschnitt des Dichtelementes auch im Wesentlichen queren.

Es können auch mehrere Paare von Kontaktflächen beabstandet nebeneinander in einem Dichtelement angeordnet sein, wobei die Kontaktflächen vorzugsweise durch einen Schlitz gebildet werden, der zu einer Seite des Dichtelements hin offen ist. Das geschlossene Ende des Schlitzes sollte sich dabei vorzugsweise bei allen Schlitzen am analogen Ende befinden, sodass von dort aus das Dichtelement wie ein Fächer aufgespreizt werden kann zum Einlegen der hindurchzuführenden Adern zwischen die Kontaktflächen.

Damit eine ausreichende Abdichtung erfolgt, sollte das Dichtelement in Erstreckungsrichtung der hindurchzuführenden Adern mindestens eine Länge entsprechend dem **20**ig-fachen, besser dem **30**ig-fachen des Außendurchmessers der hindurchzuführenden dicksten Ader besitzen. Es können ferner in den Kontaktflächen, insbesondere in wenigstens einer der Kontaktflächen, Kerben in Verlaufsrichtung der Adern angeordnet sein, von denen jede zum Einlegen einer hindurchzuführenden Ader dienen kann. Dies erleichtert auch die Montage und die Handhabung.

Hinsichtlich des **Verfahrens** zum abgedichteten Hindurchführen einzelner Adern durch die Öffnung einer Platte wird die Aufgabe dadurch gelöst, dass die ein oder mehreren Adern zunächst lose durch die entsprechende Öffnung hindurch geführt werden und dann abseits der Platte der Dichtblock in der im Verfahrensanspruch beschriebenen Art und Weise um die Adern gelegt und in die Öffnung verschoben und dort verrastet wird.

Unabhängig davon können durch andere Durchbrüche der Platte natürlich auch ganze Kabel hindurchgeführt und abgedichtet werden mittels der bekannten Kabeltüllen aus gummiartigem Material, sodass die in einer Platte vorhandenen Öffnungen wahlweise zum Hindurchführen eines oder mehrerer Kabel oder zum Hindurchführen einer oder mehrerer einzelnen Adern benutzt werden kann, ohne dass dies vorher, insbesondere bei Herstellung der Platte, bereits entschieden und festgelegt oder die Platte entsprechend gestaltet sein muss. Lediglich eine ausreichende Anzahl von Öffnungen muss in der Platte vorhanden sein.

Um eine ausreichende Abdichtung der einzelnen Adern zu erreichen, wird dabei der Abstand zwischen den einzelnen durch dieselbe Öffnung verlaufenden Adern nebeneinander zwischen den Kontaktflächen ausreichend groß gewählt, und zwar mindestens entsprechend dem einfachen, besser dem zweifachen, besser dem dreifachen, des größeren Durchmessers jedes der beteiligten Paare von Adern.

Sofern der Dichtblock ein Dichtelement-Gehäuse umfasst, wird dieses beim Einschieben des Dichtblockes in die Öffnung gegenüber der Öffnung befestigt, insbesondere an der im Innenumfang verrastet. Dennoch kann zusätzlich und/oder stattdessen das Gehäuse geschlossen gehalten werden durch eine in Umfangsrichtung um das Dichtelement-Gehäuse herum gelegte Kabelbinder, der dadurch in seiner Position gesichert wird, dass er in einen entsprechenden Einkerbungen auf der Außenseite des Dichtelement-Gehäuses liegt. Auf diese Art und Weise wird der Dichtblock auch beim Entfernen oder vor dem Einsetzen in die Öffnung der Platte zusammen gehalten.

Um eine ausreichende Dichtwirkung gegenüber den Adern zu entfalten, muss das Dichtelement in Richtung der Plattenebene ein ausreichendes Übermaß gegenüber dem Innenraum des geschlossenen Dichtelement-Gehäuses besitzen, um mit einer ausreichenden Vorspannung am Außenumfang der hindurch geführten Adern anzuliegen.

Sofern kein Dichtelement-Gehäuse vorhanden ist, ist eine solche Vorspannung nur unmittelbar auf Höhe der Plattenebene gegeben und nimmt mit zunehmender Entfernung von dort aus sehr schnell stark ab, weshalb das Vorsehen eines Dichtelement-Gehäuses unbedingt zu empfehlen ist.

### c) Ausführungsbeispiele

Ausführungsformen gemäß der Erfindung sind im Folgenden beispielhaft näher beschrieben. Es zeigen:

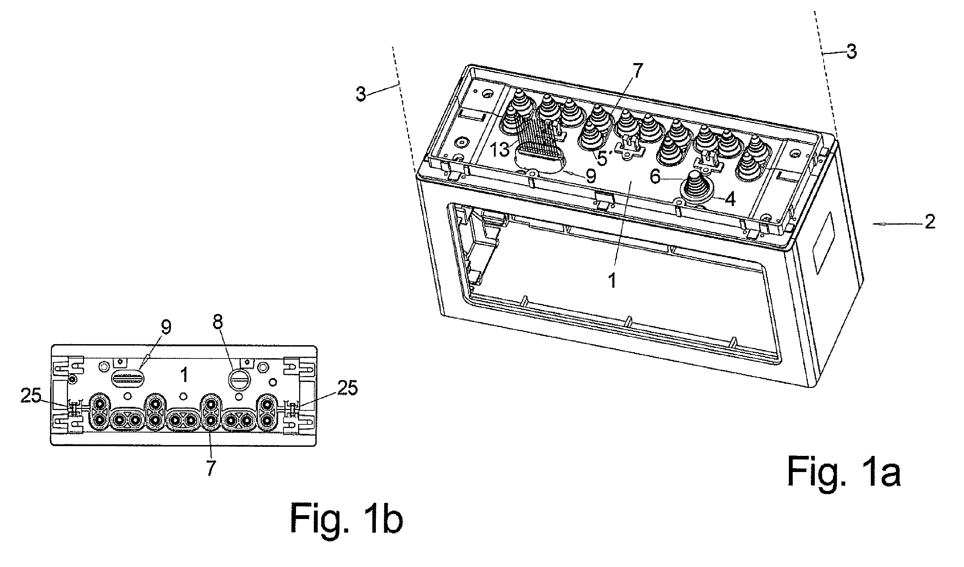

- Fig. **1**a:: den Sockel eines Verteilerschrankes,
- Fig. **1**b:: die Bodenplatte eines Verteilerschrankes von unten,
- Fig. **2**:: die eine Hälfte der zweiteiligen Bodenplatte,
- Fig. **3**:: einen Dichtblock in Explosionsdarstellung,
- Fig. **4**a:: ein Dichtelement in perspektivischer Ansicht,

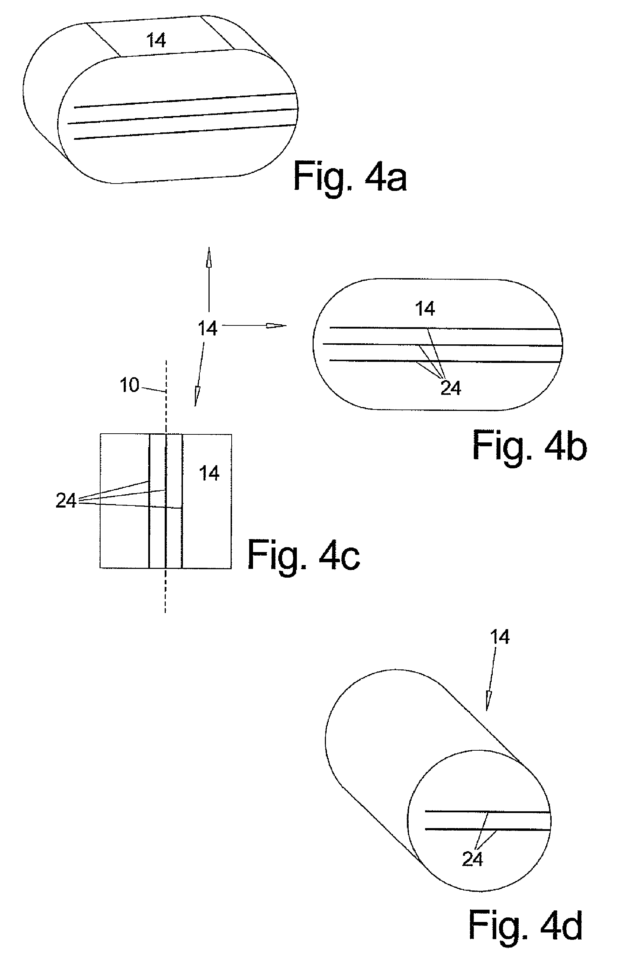

- Fig. **4**b, c:: das Dichtelement der Fig. **4**a in Einzelansichten,
- Fig. **4**d:: ein weiteres Dichtelement in perspektivischer Darstellung,

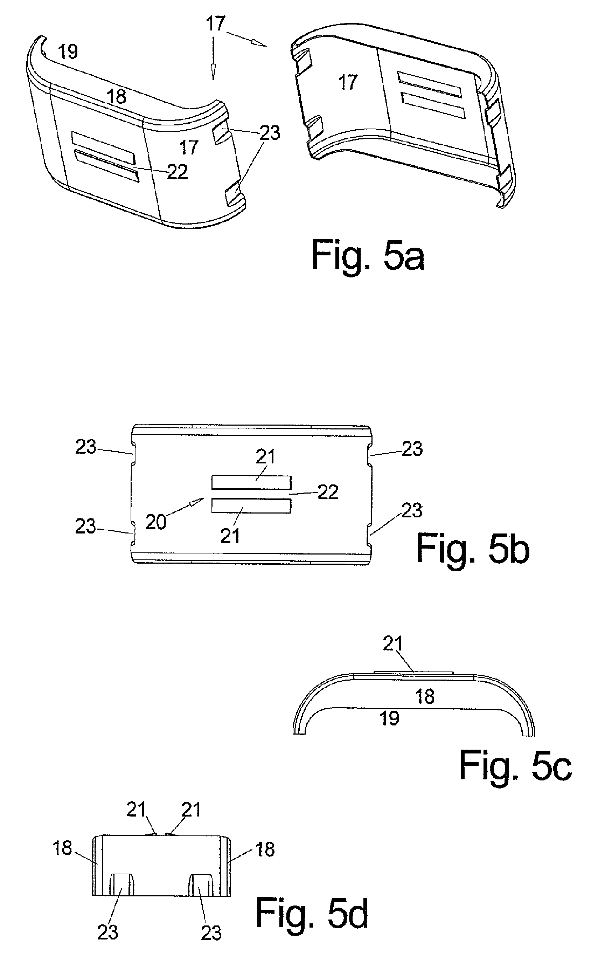

- Fig. **5**a:: ein zweiteiliges Dichtelement-Gehäuse in perspektivischer Darstellung auseinander gezogen,
- Fig. **5**b-d:: Einzeldarstellungen des einen Teils des Dichtelement-Gehäuses.

**Figur 1a** zeigt in perspektivischer Ansicht von oben den Sockel **2** eines üblichen, darauf aufsitzenden Verteilerschrankes **3.** Die Oberseite des Sockels **2** wird durch eine Bodenplatte **1** verschlossen.

Im Sockel **2** münden von unten her die - nicht dargestellten - in den Verteilerschrank **3** hinauf zu führenden Erdkabel, die durch die Bodenplatte **1** hindurch geführt werden müssen und diese Hindurchführungen müssen natürlich auch feuchtigkeitsdicht ausgeführt werden.

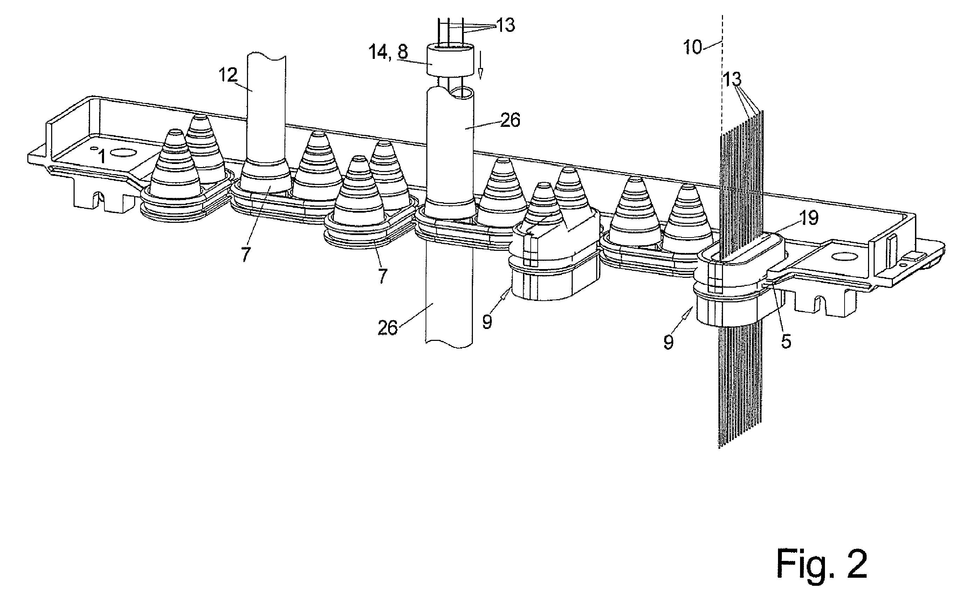

Zu diesem Zweck sind in der Bodenplatte **1** runde Durchbrüche **4** oder langloch-förmige Durchbrüche **5** angeordnet, in denen einzelne, runde Kabeltüllen **6** oder zwei nebeneinander liegende, zu einem einzigen Element zusammen gefasste, längliche Kabeltüllen **7** eingesetzt sind. Diese Kabeltüllen **6, 7** besitzen die bekannte Kegelform, sodass sie je nach Durchmesser des hindurch zu führenden Kabels **12** auf der passenden Höhe abgeschnitten und dadurch geöffnet werden muss, wie z.B. in Figur **2** dargestellt.

**Figur 1b** zeigt diese Bodenplatte **1** in der Ansicht von unten. Dort ist besser die Verschraubung **25** auf der Unterseite zu erkennen, mit der die beiden Teile der Bodenplatte **1** gegeneinander geschraubt werden, wobei sich die Durchbrüche **4, 5** vorzugsweise auf der Kontaktlinie zwischen den beiden Hälften der Bodenplatte **1** befinden, um die Kabeltüllen **6, 7** bequemer in die Durchbrüche einsetzen zu können, bevor die beiden Teile der Bodenplatte **1** gegeneinander verschraubt werden.

Abseits der Kontaktlinie ist weiterhin ein erfindungsgemäßer länglicher Dichtblock **9** sowie ein runder Dichtblock **8** in der Bodenplatte **1** dargestellt, durch den hindurch einzelne Adern **13** abgedichtet durch die Bodenplatte **1** hindurch geführt werden können.

**Figur 2** zeigt eine perspektivische Ansicht nur der einen Hälfte der Bodenplatte **1** mit eingesetzten Kabeltüllen **7,** wobei in einer Kabeltülle ein hindurch geführtes Kabel **12** eingezeichnet ist.

In der rechten Bildhälfte der Figur **2** ist ein länglicher Dichtblock **9** in einem länglichen Durchbruch **5** dargestellt, in den auch eine längliche Kabeltülle **7** passen würde.

Während in Figur **2** am rechten Bildrand die Adern **13** einzeln und ohne weitere Umhüllung von unten an den länglichen Dichtblock **9** heran und durch diesen hindurch geführt sind, ist in der Bildmitte der Figur **2** eine Lösung dargestellt, bei der durch eine der Kabeltüllen **7** ein Rohr **26** hindurchgeführt wird, welches beispielsweise etwas oberhalb der Kabeltülle **7** enden kann, und in welchem einzelne Adern **23** herangeführt und durch die Bodenplatte **1** geführt werden.

Wie an dieser Stelle angedeutet, sind die Adern **13** gegenüber dem Innenumfang des Rohres **26** abgedichtet mit Hilfe eines runden Dichtblockes **8,** wie er im Folgenden noch näher beschrieben wird, und mit Übermaß in das obere offene Ende des Rohres **26** eingepresst wird.

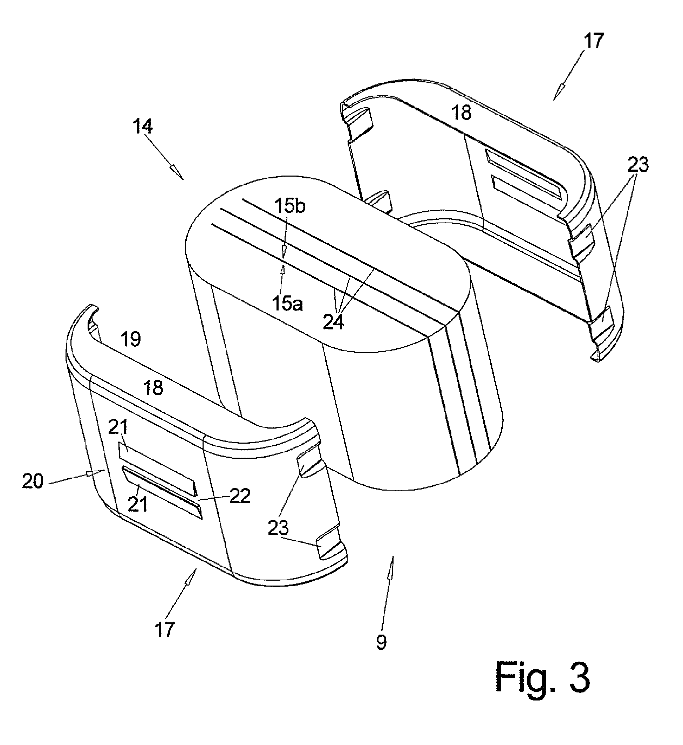

Zunächst jedoch wird anhand der **Figuren 3ff** ein länglicher Dichtblock **9** beschrieben, wie er in den Figuren **1**a, b und **2** dargestellt ist:
Dabei ist in **Figur 3** zu erkennen, dass dieser Dichtblock **9** zum einen aus einem Dichtelement **14** besteht, das in der Aufsicht betrachtet langlochförmig, also mit parallelen Seiten und je einem halbrunden Ende, gestaltet ist, und eine ausreichende Höhe besitzt, um die in Richtung der Höhe später hindurch verlaufenden Adern **13** ausreichend abdichten zu können. Das Dichtelement **14** besteht aus einem elastischen Material, wie etwa einem geschlossen-zelligen Schaumstoff. Um die Adern **13** in das Dichtelement **14** einbringen zu können, ist dieser mit drei in diesem Fall parallel verlaufenden Schlitzen **24** versehen, die über die Höhe des Dichtelementes **14** durchgehen, und in der Aufsicht betrachtet an einer der Stirnseiten des Dichtelementes **14** münden, die andere Stirnseite jedoch nicht ganz erreichen.

Dadurch bleibt das Dichtelement **14** ein einheitliches, einstückiges Element, auch wenn die Einzelteile auseinander geklappt werden, sodass die in Figur **3** geschlossen dargestellten Schlitze **24** sich V-förmig öffnen, um das Einschieben der Adern **13** von der Seite zu erleichtern.

Danach werden die Schlitze **24** wieder geschlossen, indem die Kontaktflächen **15**a, b jedes Schlitzes gegeneinander gedrückt werden. Um diese Anpressung beizubehalten ist das Dichtelement **14** aus elastischem Material in einem in diesem Fall länglichen Dichtelement-Gehäuse **17** aufgenommen, welches aus zwei Halbschalen besteht, die sich im gegeneinander gelegten Zustand auf der Längsmittelebene des Dichtelementes **14,** in diesem Fall also auf der Ebene des mittleren Schlitzes **24,** berühren.

Das Dichtelement-Gehäuse besteht aus einem starren Material wie etwa hartem Kunststoff, welches in Umfangsrichtung des Dichtelementes **14** dieses vollständig umgibt, an der oberen und unteren Stirnseite jedoch nur vom Rand aus nach innen ragende Anschlagflächen **18** bietet, damit das Dichtelement **14** nicht unbeabsichtigt nach unten oder oben aus dem Gehäuse **17** herausrutschen kann.

Der zentrale Bereich der oberen und unteren Stirnseite bleibt dagegen als Öffnung **19** zum Hindurchführen der Adern **13** offen. Wie am besten den **Figuren 5a** **bis d** zu entnehmen, in denen insbesondere nur eine der beiden Halbschalen eines solchen Gehäuses **17** dargestellt ist, besitzt jede der Halbschalen auf ihrer Außenseite eine Befestigungsvorrichtung **20,** um im montierten Zustand das Dichtelement-Gehäuse **17** gegenüber der Bodenplatte **1** zu fixieren.

In diesem Fall besteht die Befestigungsvorrichtung **20** aus zwei horizontal, also parallel zur Ebene der Bodenplatte **1** und damit der oberen oder unteren Stirnfläche **18** des Dichtblockes **9** verlaufenden Wulsten **21** auf der Außenseite des Gehäuses, insbesondere jeder Halbschale, sodass durch den Abstand zwischen den Wulsten **21** eine Nut **22** gebildet ist entsprechend der Dicke einer darin aufzunehmenden Bodenplatte.

Da die Wulste **21** von ihrem äußeren Rand zur mittigen Nut **22** hin eine ansteigende Fläche bilden, kann ein solches Gehäuse **17** unter leichter Verformung des Gehäuses **17** von oben oder unten in die entsprechende Öffnung **5** der Bodenplatte **1** eingedrückt werden.

Ferner sind in Umfangsrichtung verlaufende, jeweils in der Kontaktkante zur anderen Halbschale hin mündende Einkerbungen **23** im äußeren Umfang der beiden Halbschalen des Gehäuses **17** angeordnet, die der Aufnahme eines in Umfangsrichtung das Gehäuse **17** umlaufenden Kabelbinders dienen, um das Gehäuse **17** zusammen zu halten. Die Einkerbungen sind oberhalb und unterhalb der Befestigungsvorrichtung **20,** also nahe einer der beiden Stirnseiten **18,** angeordnet.

Während in den **Figuren 3** sowie **4 a-c** ein länglicher Dichtblock **9** dargestellt ist - in Figur **4c** zur besseren Orientierung einschließlich der Verlaufsrichtung **10** der darin hindurch zu führenden Adern **13 -** zeigt **Figur 4d** in perspektivischer Ansicht wie Figur **4**a ein in der Aufsicht auf die Stirnfläche kreisrundes Dichtelement **14.** Dieses verfügt z.B. nur über zwei parallel zueinander verlaufende Schlitze **24,** ist aber ansonsten genauso aufgebaut wie anhand des länglichen Dichtblockes **14** erläutert.

Ein solches rundes Dichtelement **14** ist als runder Dichtblock **8,** also in diesem Fall ohne umgebendes weiteres spezielles Gehäuse, in Figur **2** zum Einschieben in das umgebende, die Sockelplatte **1** durchdringende Rohr **26** dargestellt.

### BEZUGSZEICHENLISTE

- 1: Platte, Bodenplatte
- 2: Sockel
- 3: Verteilerschrank
- 4: Runder Durchbruch
- 5: Länglicher Durchbruch
- 6: Runde Kabeltülle
- 7: Längliche Kabeltülle
- 8: Runder Dichtblock
- 9: Länglicher Dichtblock
- 10: Kabelrichtung, Aderrichtung, Verlaufsrichtung
- 11: Plattenebene
- 12: Kabel
- 13: Ader
- 14: Dichtelement
- **15**a, b: Kontaktfläche
- 16: rundes Dichtelement-Gehäuse
- 17: längliches Dichtelement-Gehäuse
- 18: Anschlagfläche
- 19: Öffnung
- 20: Befestigungsvorrichtung
- 21: Wulst
- 22: Nut
- 23: Einkerbung
- 24: Schlitz
- **25**: Verschraubung
- **26**: Rohr

## Patentansprüche

1. Baukasten für die Abdichtung von Kabeln (**12**) oder Adern (**13**) die durch eine Platte (**1**), insbesondere die Bodenplatte (**1**), eines Verteilerschrankes (**3**), verlaufen gegen entlang der Kabel (**12**) oder Adern (**13**) vordringende Flüssigkeit, wobei die Platte (**1**) sowohl runde Durchbrüche (**4**) als auch längliche Durchbrüche (**5**) aufweist, mit
- runden Kabeltüllen (**6**), die in einen runden Durchbruch (**4**) passen zum Hindurchführen nur eines Kabels (**12**),
- längliche Kabeltüllen (**7**), die in einen länglichen Durchbruch (**5**) passen, zum Hindurchführen wenigstens zweier Kabel (**12**),
**gekennzeichnet durch**
- wenigstens einen Dichtblock (**8, 9**), der in einen der Durchbrüche (**4**, (**5**) passt zum Hindurchführen von wenigstens einer einzelnen Ader (**13**), mit it
- einem Dichtelement (**14**) aus einem elastischen Material mit zwei gegeneinander gerichteten, im montierten Zustand gegeneinander gepressten Kontaktflächen (**15**a, b), die in Erstreckungsrichtung (**10**) der Ader (**13**) liegen und zwischen denen die wenigstens eine Ader (**13**) **durch** die Platte (**1**) verlaufen.

2. Baukasten nach Anspruch **1**,
**dadurch gekennzeichnet, dass**
der Baukasten sowohl runde Dichtblöcke (**8**), die in einen runden Durchbruch (**4**) passen, als auch längliche Dichtblöcke (**9**), die in einen länglichen Durchbruch (**5**) passen, umfasst.

3. Baukasten nach einem der vorhergehenden Ansprüche,
**dadurch gekennzeichnet, dass**
jeder Dichtblock (**8, 9**) zusätzlich zu dem Dichtelement (**14**) ein Dichtelement-Gehäuse (**16, 17**) umfasst mit
- in Verlaufsrichtung (**10**) stirnseitigen Öffnungen (**19**) zum Hindurchtreten der wenigstens einen Ader (**13**),
- stirnseitigen Anschlagflächen (**18**) für das Dichtelement (**14**) und
- einer Befestigungsvorrichtung (**20**) auf der Außenseite zum Befestigen gegenüber der Platte (**1**).

4. Baukasten nach einem der vorhergehenden Ansprüche,
**dadurch gekennzeichnet, dass**
- die Befestigungsvorrichtung eine Rastvorrichtung (**20**) ist mit quer zur Verlaufsrichtung (**10**) angeordneten Wulsten (**21**), zwischen denen eine Nut (**22**) mit einer Breite entsprechend der Dicke der Platte (**1**) ausgebildet ist, und/oder
- das Dichtelement-Gehäuse (**16, 17**) aus zwei separaten oder an einer Längsseite gelenkig miteinander verbundenen Halbschalen besteht.

5. Baukasten nach einem der vorhergehenden Ansprüche,
**dadurch gekennzeichnet, dass**
in den Außenflächen des Dichtelement-Gehäuses (**16, 17**), insbesondere an den Kontaktstellen und/oder Gelenkstellen der Halbschalen, in Umfangsrichtung des Dichtelement-Gehäuses (**16, 17**) verlaufende Einkerbungen (**23**) vorhanden sind mit einer Breite entsprechend der Breite eines für die Umfangslänge üblichen Kabelbinders.

6. Baukasten nach einem der vorhergehenden Ansprüche,
**dadurch gekennzeichnet, dass**
das Dichtelement (**14**) aus Schaumstoff, insbesondere geschlossen-zelligem Schaumstoff, besteht.

7. Baukasten nach einem der vorhergehenden Ansprüche,
**dadurch gekennzeichnet, dass**
die Kontaktflächen (**15a, b**), insbesondere bei länglichen Dichtelementen (**14**), in Richtung der größeren Erstreckungsrichtung des in Verlaufsrichtung (**10**) der Ader (**13**) betrachteten Dichtblockes (**8,9**) verlaufen.

8. Baukasten nach einem der vorhergehenden Ansprüche,
**dadurch gekennzeichnet, dass**
- bei einem länglichen Dichtelement (**14**) mehrere Paare von Kontaktflächen (**15**a, b) nebeneinander beabstandet verlaufen, und/oder
- bei einem runden Dichtelement (**14**) die Paare von Kontaktflächen (**15**a, b) rund oder spiralförmig verlaufen.

9. Baukasten nach einem der vorhergehenden Ansprüche,
**dadurch gekennzeichnet, dass**
- die Paare von Kontaktflächen (**15**a, b) gebildet werden durch einen zu einer Seite des Dichtelementes (**14**) hin offenen Schlitz, sodass das Dichtelement fächerförmig aufgespreizt werden kann, aber einteilig ausgebildet ist, und/oder
- in wenigstens einer der Kontaktflächen (**14**, **15**) Schlitze oder Kerben in Verlaufsrichtung (**10**) der Adern (**13**) angeordnet sind.

10. Baukasten nach einem der vorhergehenden Ansprüche,
**dadurch gekennzeichnet, dass**
das Dichtelement (**14**) in Erstreckungsrichtung mindestens eine Länge entsprechend dem zwanzigfachen, besser dem dreißigfachen des Außendurchmessers der hindurchzuführenden Adern (**13**) aufweist.

11. Baukasten nach einem der vorhergehenden Ansprüche,
d**adurch gekennzeichnet, dass**
der Baukasten ein im Querschnitt rundes Rohr oder Schlauch umfasst, die in einen runden Durchbruch (**4**) der Platte passen, sowie einen runden Dichtblock (**8**), insbesondere ein rundes Dichtelement, welches in den freien Querschnitt des runden Rohres oder des runden Schlauches mit Übermaß hineinpasst.

12. Verfahren zum abgedichteten Hindurchführen von einzelnen Adern (**13**) und Kabeln (**12**) durch eine Platte, insbesondere die Bodenplatte (**1**) eines Verteilerschrankes (**3**) aus dessen Sockel (**2**) nach oben mit folgenden Schritten:
a) Auswahl einer Bodenplatte (**1**) mit einer ausreichenden Anzahl von Durchbrüchen (**4, 5**) entsprechend der Anzahl der hindurchzuführenden Kabel (**12**) und Adern (**13**),
b) Einsetzen der entsprechenden Anzahl von Kabeltüllen (**6, 7**) in die entsprechenden Durchbrüche (**4, 5**), Öffnen der Kabeltüllen (**6, 7**) am entsprechenden Durchmesser und Hindurchführen der Kabel (**12**),
c) Hindurchführen der einzelnen Adern (**13**) durch die entsprechenden Durchbrüche (**4, 5**),
d) Auseinanderbewegen, insbesondere Aufspreizen, der Kontaktflächen (15a, b) des Dichtelementes (14),
e) Anordnen der wenigstes einen Ader (13) zwischen einem Paar von Kontaktflächen (15a, b) eines Dichtelementes (14) insbesondere oberhalb der Platte, so, dass der Abstand der mehreren einzulegenden Adern (13) in einem Durchbruch (4, 5) lotrecht zur Erstreckungsrichtung (10) der Adern (13) mindestens dem einfachen, besser dem zweifachen, besser dem dreifachen des Durchmessers der Ader (13) entspricht,
f) Einbringen des Dichtelementes (13) in den Durchbruch (4, 5) durch Entlangschieben entlang der wenigstens einen Ader (13),
g) Befestigen des Dichtblockes (**8, 9**) in dem Durchbruch (**4, 5**).

13. Verfahren nach Anspruch **12,**
**dadurch gekennzeichnet, dass**
nach dem Anordnen der wenigstens einen Ader (**13**) zwischen den Kontaktflächen (**14, 15**) ein Dichtelement-Gehäuse (**16, 17**) um das Dichtelement (**14**) herum gelegt wird.

14. Verfahren nach einem der vorhergehenden Verfahrensansprüche, **dadurch gekennzeichnet, dass**
nach dem Befestigen und insbesondere Verrasten des Dichtelement-Gehäuses (**16, 17**) im Durchbruch (**4, 5**) wenigstens ein Kabelbinder in Umfangsrichtung um die Außenseite des Dichtelement-Gehäuses (**16, 17**) entweder oberhalb oder unterhalb oder beides der Platte (**1**) gelegt und stramm gezogen wird.

15. Verfahren nach einem der vorhergehenden Verfahrensansprüche,
**dadurch gekennzeichnet, dass**
das Dichtelement (**14**) in lotrechter Querrichtung zu den Kontaktflächen (**15**a, b) ein Übermaß gegenüber dem Innenraum des Dichtelement-Gehäuses (**16**) besitzt, und das Übermaß insbesondere abhängig von der Elastizität des verwendeten Dichtelementes (**14**) ist.
